# EUROPÄISCHE PATENTANMELDUNG

(11) **EP 3 989 218 A1**
(43) Veröffentlichungstag der Anmeldung: **27.04.2022**
(21) Anmeldenummer: 20203064.9
(22) Anmeldetag: 21.10.2020
(51) Int. Cl.: G10L 15/22, G06F 3/16

(54) **BEDIENUNGSFREUNDLICHER VIRTUELLER SPRACHASSISTENT**

(71) Anmelder: Deutsche Telekom AG, 53113 Bonn (DE)
(72) Erfinder: Minow, Jascha, 64625 Bensheim (DE); Jahn, Carl, 65191 Wiesbaden (DE); El-Mallouki, Said, 56329 St. Goar (DE); Platschek, Martin Michael, 13347 Berlin (DE)
(74) Vertreter: Braun-Dullaeus Pannen Emmerling Patent- & Rechtsanwaltspartnerschaft mbB

(57) **Zusammenfassung**

Beschrieben sind Techniken zur Aktivierung eines sich im Ruhemodus befindlichen virtuellen Sprachassistenten eines Nutzerendgeräts umfassend die folgenden Schritte:
• Aufnahme einer Sprachsequenz eines Nutzers mittels einer Mikrofoneinheit des Nutzerendgeräts;
• Durchführen einer ersten Analyse durch einen auf einer Rechnereinheit des Nutzerendgeräts implementierten Algorithmus, ob es sich bei der Sprachsequenz um einen an das Nutzerendgerät gerichteten Sprachbefehl handelt und falls die Analyse ergibt, dass es sich um einen Sprachbefehl für das Nutzerendgerät handelt, werden folgende weitere Schritte ausgeführt:
• Durchführen einer zweiten Analyse der Sprachsequenz durch das Nutzerendgerät und/oder Durchführen der zweiten Analyse der Sprachsequenz durch eine Sprachdienstleistungsplattform im Backend an die die Sprachsequenz über ein Netzwerk weitergeleitet wurde, wobei die zweite Analyse aus der Sprachsequenz die Bedeutung des Sprachbefehls ermittelt;
∘ Generierung einer Sprachantwort basierend auf dem Sprachbefehl durch das Nutzerendgerät oder durch die Sprachdienstleistungsplattform und Ausgabe der Sprachantwort an den Nutzer mittels einer Lautsprechereinheit des Nutzerendgeräts,

und/oder
Ausführen des Sprachbefehls durch das Nutzerendgerät oder durch die Sprachdienstleistungsplattform .

## Beschreibung

Die Erfindung betrifft ein Verfahren, ein Kommunikationssystem, ein Computerprogrammprodukt sowie ein Nutzerendgerät, dass die Kommunikation eines Nutzers mit einem virtuellen Sprachassistenten auf dem Nutzerendgerät erleichtert.

Bei der Kommunikation mit einem virtuellen Sprachassistenten, wie etwa "Alexa" oder "Siri", ist die Nennung eines Aufwachwortes "Wake-Up Word", wie z. B. "Alexa" oder "Hey, Siri", notwendig, damit der Sprachassistent im passiven Zuhörmodus weiß, dass das folgende Kommando ihm gilt und nicht einer anderen Person im Raum. Vor allem wenn sich keine weitere Person im Raum befindet, ist dies keine natürliche menschliche Kommunikation.

Die Geschwindigkeit und Natürlichkeit der Sprachsteuerung und Interaktion mit einem virtuellen Sprachassistenten wird dadurch negativ beeinflusst und zudem erfordert das "Wake-Up Word" eine Lernkurve beim Menschen, der das Wort erst lernen und dann richtig aussprechen muss - vor allem älteren Menschen, denen ein solcher Sprachassistent beispielsweise in Notsituationen besonders effektiv helfen kann, können sich nur schwer an die Verwendung eines Wake-Up Words gewöhnen oder vergessen dieses in einer akuten Notsituation. Auch die Nutzung verschiedener Sprachassistenten gleichzeitig wird damit erschwert, da ein Benutzer immer das für den jeweiligen Sprachassistenten notwendige Wake-Up Word nennen muss. Ein weiteres Problem, dass sich im Zusammenhang mit der Benutzung von mehreren Sprachassistenten durch einen Nutzer ergibt ist, dass jeder dieser Sprachassistenten spezifische Befehle bzw. spezifische "Skills" hat bzw. diese ausführen kann. Es mag zwar viele Befehle bzw. Skills geben, die von allen diesen Sprachassistenten ausgeführt werden können, jedoch können die spezifischen Befehle nur von dem hierfür vorgesehenen Sprachassistenten ausgeführt werden. Unter Umständen handelt es sich sogar um denselben Skill, der aber von verschiedenen Befehlen "getriggert" wird. In diesen Fällen muss der Nutzer also genau wissen, welcher Sprachassistent mit welchem spezifischen Befehl angesprochen werden muss. Dies funktioniert bei den vielen tausend Skills, die den jeweiligen Sprachassistenten zur Verfügung stehen, natürlich nicht reibungslos, sodass Frustration oder Fehlfunktionen vorprogrammiert sind.

Das Wake-Up Word unterbricht also jedenfalls zumindest den natürlichen Sprachfluss und wirkt dadurch stören. Wird das Wake-Up Word nicht erkannt, müssen der dem Wake-Up Word erfolgte Sprachbefehl sowie das Wake-Up Word erneut wiederholt werden. Das führt zu Frustration und keiner natürlichen Konversation mit dem Sprachassistenten und vermindert damit die Akzeptanz und Effizienz. Wake-Up Words sind kein Bestandteil des eigentlichen Sprachbefehls.

Das "Wake-Up Word" kann ebenso als Aufwachwort oder als Aktivierungswort bezeichnet werden.

Es ist also die Aufgabe der Erfindung ein Verfahren, ein Kommunikationssystem, ein Computerprogrammprodukt sowie ein Nutzerendgerät mit einem Sprachassistenten anzugeben, die die Kommunikation von Menschen mit dem Sprachassistenten erleichtern.

Diese Aufgabe wird mit den Merkmalen der unabhängigen Ansprüche gelöst.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Gemäß einem ersten Aspekt der Erfindung ist ein Verfahren zur Aktivierung eines sich im Ruhemodus befindlichen virtuellen Sprachassistenten eines Nutzerendgeräts angegeben, wobei das Verfahren die folgenden Schritte umfasst:
- Aufnahme einer Sprachsequenz eines Nutzers mittels einer Mikrofoneinheit des Nutzerendgeräts. Dabei kann ein Aufnahmemodus der Mikrofoneinheit jederzeit aktiv und quasi im Hintergrund betrieben werden, sodass alles was ein Nutzer sagt als Sprachsequenz erfasst werden kann;
- Durchführen einer ersten Analyse durch einen auf einer Rechnereinheit des Nutzerendgeräts implementierten Algorithmus, ob es sich bei der Sprachsequenz um einen an das Nutzerendgerät gerichteten Sprachbefehl handelt und falls die Analyse ergibt, dass es sich um einen Sprachbefehl für das Nutzerendgerät handelt Durchführen folgender weiterer Schritte:
- Durchführen einer zweiten Analyse der Sprachsequenz durch das Nutzerendgerät und/oder Durchführen der zweiten Analyse der Sprachsequenz durch eine Sprachdienstleistungsplattform im Backend an die die Sprachsequenz über ein Netzwerk weitergeleitet wurde, wobei die zweite Analyse aus der Sprachsequenz die Bedeutung des Sprachbefehls ermittelt;
   o Generierung einer Sprachantwort basierend auf dem Sprachbefehl durch das Nutzerendgerät oder durch die Sprachdienstleistungsplattform und Ausgabe der Sprachantwort an den Nutzer mittels einer Lautsprechereinheit des Nutzerendgeräts,
- und/oder
   ∘ Ausführen des Sprachbefehls durch das Nutzerendgerät oder durch die Sprachdienstleistungsplattform, wobei der ermittelte Steuerbefehl von der Sprachdienstleistungsplattform an das Nutzerendgerät, wenn die zweite Analyse auf der Sprachdienstleistungsplattform stattgefunden hat.

Bei dem Nutzerendgerät kann es sich insbesondere um einen intelligenten Lautsprecher, ein Smartphone, eine Smartwatch, einen Fernseher oder ähnliche Geräte mit einem virtuellen Sprachassistenten handeln. Prinzipiell kann der virtuelle Sprachassistenten auf dem Nutzerendgerät oder auf der Sprachdienstleistungsplattform implementiert sein. In dem zweiten Fall dient das Nutzerendgerät quasi als Vermittler des Sprachbefehls.

Das Verfahren ermöglicht es also vorteilhaft die Funktionen eines virtuellen Sprachassistenten zu nutzen ohne ein "Wake-Up Word" kennen zu müssen, da es das Verfahren ermöglicht alleine aufgrund der Sprachsequenz darauf zu schließen, ob es sich um einen Sprachbefehl handelt, wobei dieser Sprachbefehl dann auch ausgeführt wird. Beispielsweise kann dies von großem Vorteil sein, wenn insbesondere ältere Menschen stürzen und nur noch in der Lage sind "Hilfe" zu rufen. Insbesondere kann das Verfahren auch vorsehen, dass ein mehrmaliges Rufen des Wortes "Hilfe" jedenfalls als Sprachbefehl für den virtuellen Assistenten detektiert wird, wobei entweder der intelligente Sprachassistenten oder die Sprachdienstleistungsplattform automatisiert einen Rettungswagen rufen können.

Dadurch, dass zuerst in der ersten Analyse auf dem Nutzerendgerät analysiert wird, ob es sich überhaupt um einen Sprachbefehl handelt, werden effizient Ressourcen geschont. Zum einen die Ressourcen auf dem Nutzerendgerät, da die zweite Analyse nur dann stattfindet, wenn ein Sprachbefehl vorliegt, als auch eine Ressourcenschonung in Bezug auf die Sprachdienstleistungsplattform. Zum einen wird eine unnötige Datenübertragung zu der Sprachdienstleistungsplattform und die zweite Analyse der Sprachdienstleistungsplattform nur dann vorgenommen, wenn es sich wirklich um einen Sprachbefehl handelt. Bevorzugt berechnet die erste Analyse eine Wahrscheinlichkeit, dass sich um einen Sprachbefehl handelt. Übersteigt diese Wahrscheinlichkeit einen definierbaren Schwellenwert, so wird die zweite Analyse durchgeführt. Durch eine Anpassung des Schwellenwerts kann erreicht werden, dass lediglich "wirkliche" Sprachbefehle für die zweite Analyse bereitgestellt werden.

Es gibt Sprachbefehle für den virtuellen Sprachassistenten bei denen es vorteilhaft ist diese nicht erst an die Sprachdienstleistungsplattform weiterzuleiten. Betrifft der Sprachbefehl beispielsweise Smart Home Dienstleistungen, wie etwa das Anschalten der Waschmaschine, kann dies alleine durch den virtuellen Sprachassistenten auf dem Nutzerendgerät getriggert werden. Werden dem virtuellen Sprachassistenten allerdings komplexe Fragen gestellt, kann es zur Auswertung dieser Fragen von Vorteil sein auf eine große Datenbank einer Sprachdienstleistungsplattform zurückzugreifen. Betreffen die Sprachbefehle Dienstleistungen aus dem Internet, wie beispielsweise eine Wettervorhersage, kann eine entsprechende Antwort sowohl von dem Nutzerendgerät als auch von der Sprachdienstleistungsplattform aus dem Internet erfragt werden.

Die Generierung der Sprachantwort ist für den Nutzer insbesondere dann vorteilhaft, wenn diese eine konkrete Frage an den virtuellen Sprachassistenten gestellt hat. Hat der Nutzer aber beispielsweise einen Sprachbefehl gegeben, der von einer Smart-Home-Einheit ausgeführt werden soll, dann muss nicht notwendigerweise eine Sprachantwort erzeugt werden, sondern es kann genügen die entsprechende Smart Home Einheit mit dem Befehl anzuweisen.

Um in der ersten Analyse zu erkennen, ob es sich um einen Sprachbefehl handelt, kann sich das Verfahren folgender Tatsache bedienen: Befindet sich ein Nutzer alleine im Raum, dann wird es sich gewöhnlich um einen Sprachbefehl handeln, wenn der Nutzer spricht. Um festzustellen, ob sich die Person alleine im Raum befindet, kann das Verfahren feststellen, ob innerhalb einer vorbestimmten Zeit, beispielsweise innerhalb der letzten 5 Minuten, überhaupt gesprochen wurde oder ob die empfangenen Sprachsequenzen lediglich bezüglich der Audio Signatur von einer einzigen Person stammen. Stellt die erste Analyse also fest, dass länger als 5 Minuten nicht gesprochen wurde, kann die nach diesen 5 Minuten empfangene Sprachsequenz mit hoher Wahrscheinlichkeit als Sprachbefehl ermittelt werden. Bevorzugt weist das Nutzerendgerät für diese Analyse einen Speicher auf, der eingerichtet ist eine Audioumgebung der vorbestimmten Zeit abzuspeichern und/oder verschiedene Sprachprofile zu hinterlegen.

Bevorzugt werden zusätzliche Aufnahme eines Kamerabildes mit einer Kameraeinheit des Nutzerendgeräts gemacht, wobei diese Informationen des Kamerabildes für die erste Analyse verwendet werden.

Dies hat den Vorteil, dass mit größerer Sicherheit durch die erste Analyse festgestellt werden kann, ob es sich bei der Sprachsequenz um ein Sprachbefehl handelt. Schaut der Nutzer beispielsweise während der Aufnahme auf das Nutzerendgerät, erhöht dies die Wahrscheinlichkeit, dass der Nutzer gerade einen Sprachbefehl gesagt hat. Hierzu kann insbesondere ein Zeitstempel der Sprachsequenz mit einem Zeitstempel des Kamerabildes respektive der Videoaufnahmen des Kamerabildes verglichen werden. Hierbei sollten die Zeitstempel in eine Art in Übereinstimmung gebracht werden, dass das Kamerabild zu der Sprachsequenz synchronisiert wird.

Zweckmäßigerweise analysiert die erste Analyse ein Signal-zu-Rausch-Verhältnis der Sprachsequenz.

Dies hat den Vorteil, dass mit größerer Sicherheit durch die erste Analyse festgestellt werden kann, ob es sich bei der Sprachsequenz um einen Sprachbefehl handelt. Je höher das Signal-zu-Rausch-Verhältnis ist, desto größer ist die Wahrscheinlichkeit, dass der Nutzer in Richtung des Nutzerendgeräts gewandt ist, wenn er die Sprachsequenz sagt. Eine weitere Möglichkeit ist es, das Signal-zu-Rausch-Verhältnis mit vorherigen Signal-zu-Rausch-Verhältnissen zu vergleichen, um zu ermitteln, ob es sich um einen Sprachbefehl handelt.

Vorzugsweise schätzt die erste Analyse eine Entfernung des Nutzers mittels einer Entfernungsmesseinheit der Mikrofoneinheit ab.

Dies hat den Vorteil, dass mit größerer Sicherheit durch die erste Analyse festgestellt werden kann, ob es sich bei der Sprachsequenz um ein Sprachbefehl handelt. Wird hierdurch beispielsweise festgestellt, dass sich der Nutzer nicht mehr im selben Raum mit dem Nutzerendgerät befindet.

In einer bevorzugten Ausgestaltung umfasst die zweite Analyse eine Transkription der Sprachsequenz zu einem Text, wobei der Sprachbefehl aus dem transkribierten Text ermittelt wird.

Dies hat den Vorteil, dass der Text leichter nach bestimmten Schlagworten, wie etwa Befehlen, analysiert werden kann. Dies ermöglicht zusätzlich eine Analyse der Syntax bzw. der Semantik, um die Bedeutung des Gesagten als einen Sprachbefehl zu erkennen und diesen auch als den "richtigen" Sprachbefehl zu erkennen. Zusätzlich ist die reine Textform von den Eigenheiten der Aussprache des Nutzers "befreit". Diese Informationsreduktion macht das zuordnen zu dem richtigen Sprachbefehl, beispielsweise anhand einer Datenbank oder eines trainierten Modells, einfacher und effizienter.

Bevorzugt wird die zweite Analyse durch den auf dem Nutzerendgerät implementierten Algorithmus und/oder durch einen Sprachdienstleistungsplattform implementierten Algorithmus ausgeführt.

Dies bietet mehrere Vorteile. Ist beispielsweise schon das Nutzerendgerät in der Lage den Sprachbefehl eindeutig zu erkennen, werden hierdurch sowohl Datenübertragungsressourcen als auch Ressourcen der Sprachdienstleistungsplattform geschont. Vorteilhaft ist diese Variante auch unter Aspekten des Datenschutzes. Ist aber der auf dem Nutzerendgerät implementierte Algorithmus nicht in der Lage den richtigen Sprachbefehl zuzuordnen, da der Sprachdienstleistungsplattform modernere und bessere Ressourcen, beispielsweise eine größere Datenbank oder ein modernerer Algorithmus, zur Verfügung stehen, kann die zweite Analyse quasi von dem Nutzerendgerät an die Sprachdienstleistungsplattform ausgelagert werden.

Bevorzugt ist zumindest einer der beiden Algorithmen ein intelligenter "Machine-Learning-Algorithmus" der mittels überwachtem Lernen trainiert wird.

Vor allem, wenn komplexe Strukturen in einer von zwei Klassen eingestuft werden sollen, sind neuronale Netze, die den Machine-Learning-Algorithmus kennzeichnen, besonders effektiv und werden immer besser, wenn diese mit einer ausreichenden Menge an Trainingsdaten trainiert werden, deren Klassenzuordnung, also erste Klasse "Ist-ein-Sprach-Befehl" und zweite Klasse "Ist-Kein-Sprachbefehl", bekannt ist. Überwachtes Lernen ist ein Teilgebiet des maschinellen Lernens. Mit Lernen ist dabei die Fähigkeit einer künstlichen Intelligenz gemeint, Gesetzmäßigkeiten nachzubilden. Die Ergebnisse sind durch Naturgesetze oder Expertenwissen bekannt und werden benutzt, um das System anzulernen. Ein Lernalgorithmus versucht, eine Hypothese zu finden, die möglichst zielsichere Voraussagen trifft. Unter Hypothese ist dabei eine Abbildung zu verstehen, die jedem Eingabewert den vermuteten Ausgabewert zuordnet. Die Methode richtet sich also nach einer im Vorhinein festgelegten zu lernenden Ausgabe, deren Ergebnisse bekannt sind. Die Ergebnisse des Lernprozesses können mit den bekannten, richtigen Ergebnissen verglichen, also "überwacht", werden. Liegen die Ergebnisse hingegen in diskreter Form vor bzw. sind die Werte qualitativ, spricht man von einem Klassifikationsproblem.

Vorzugsweise wird zumindest einer der Algorithmen regelmäßig aktualisiert. Dies hat den Vorteil, dass der Machine-Learning-Algorithmus bzw. das zugrunde liegende Modell Sprachbefehle immer zuverlässiger erkennt. Durch die Aktualisierung des Algorithmus auf dem Nutzerendgerät, beispielsweise eine Aktualisierung über das Internet, kann erreicht werden, dass sowohl die erste als auch die zweite Analyse effizienter und zielsicherer durch das Nutzerendgerät ausführbar ist. Auch der zweiten Analyse kann ein Machine-Learning-Algorithmus zugrunde liegen, der überwacht trainiert wurde.

In einer bevorzugten Ausgestaltung wird der Sprachbefehl von der Sprachdienstleistungsplattform analysiert und einem für den Sprachbefehl vorgesehenen virtuellen Sprachassistenten aus einer Mehrzahl von Sprachassistenten zugeordnet wird.

Dies bietet den Vorteil, dass der "richtige" Sprachassistent aufgefunden werden kann, der geeignet ist den Sprachbefehl auszuführen. Dies kann relevant sein, wenn der Nutzer beispielsweise mehrere Sprachassistenten, wie etwa Alexa und Siri, besitzt. Zum Teil werden sich diese Sprachbefehle nicht überschneiden, sodass eine fehlende Zuordnung dazu führen könnte, dass ein virtueller Sprachassistenten einen Sprachbefehl ausführen soll, den er nicht ausführen kann. Ob ein Sprachassistenten für einen bestimmten Sprachbefehl vorgesehen ist, kann beispielsweise auch an den Smart-Home-Funktionen, die dem virtuellen Sprachassistenten zugeordnet sind, ermittelt werden. Ist beispielsweise nur Siri mit der "smarten" Waschmaschine verknüpft, so ist klar, dass ein Sprachbefehl wie etwa "Starte die Waschmaschine" eindeutig diesem virtuellen Sprachassistenten zuzuordnen ist.

Vorzugsweise übermittelt die Sprachdienstleistungsplattform den Sprachbefehl an den zugeordneten virtuellen Sprachassistenten.

Dies bietet den Vorteil, dass der richtige virtuelle Sprachassistenten die Befehle ausführen kann und die übrigen virtuellen Sprachassistenten keinen Dateninput bekommen, mit dem sie nichts anfangen können.

Die richtige Zuordnung des virtuellen Assistenten kann durch den Vergleich des Sprachbefehls mit einer in der Sprachdienstleistungsplattform hinterlegten Datenbank ermittelt wird und/oder durch eine Anfrage an die Mehrzahl von Sprachassistenten.

Die erste Möglichkeit bietet eine effiziente Variante den richtigen virtuellen Sprachassistenten zu ermitteln ohne einen unnötigen Datenverkehr zu erzeugen. Kann jedoch mittels der hinterlegten Datenbank kein virtueller Sprachassistenten zugeordnet werden, kann sequenziell eine Anfrage an alle vorhandenen Sprachassistenten gesendet werden, bis der erste bestätigt, dass er geeignet ist den Sprachbefehl auszuführen. Das sequenzielle Abfragen führt zu einer erwünschten Verminderung des Datenverkehrs in dem Netzwerk.

Gemäß einem zweiten Aspekt der Erfindung ist ein Nutzerendgerät zur Aktivierung eines sich im Ruhemodus befindlichen virtuellen Sprachassistenten des Nutzerendgeräts angegeben, wobei das Nutzerendgerät zur Ausführung des vorstehend beschriebenen Verfahrens eingerichtet ist.

Die sich hieraus ergebenden Vorteile sind analog zu denen des beschriebenen Verfahrens.

Gemäß einem dritten Aspekt der Erfindung ist ein Kommunikationssystem umfassend ein Nutzerendgerät sowie eine Sprachdienstleistungsplattform angegeben, wobei das Nutzerendgerät über ein Kommunikationsnetzwerk mit der Sprachdienstleistungsplattform verbunden ist, wobei das Kommunikationssystem zur Aktivierung eines sich im Ruhemodus befindlichen virtuellen Sprachassistenten des Nutzerendgeräts nach dem zuvor beschriebenen Verfahren eingerichtet ist. Sowohl auf dem Nutzerendgerät als auch auf der Sprachdienstleistungsplattform sind Recheneinheiten, Speichereinheiten vorgesehen, um die Verfahrensschritte ausführen zu können. Insbesondere sind auf den Recheneinheiten entsprechende Algorithmen implementiert.

Die sich hieraus ergebenden Vorteile sind analog zu denen des beschriebenen Verfahrens.

Gemäß einem vierten Aspekt der Erfindung ist ein Computerprogramprodukt zur Aktivierung eines sich im Ruhemodus befindlichen virtuellen Sprachassistenten des Nutzerendgeräts angegeben,
- wobei das Computerprogramprodukt die Ausführung der Schritte des Verfahrens nach dem zuvor beschriebenen Verfahren auf einem Nutzerendgerät
   oder
- wobei das Computerprogramprodukt die Ausführung der Schritte des Verfahrens nach dem zuvor beschriebene Verfahren auf einer Sprachdienstleistungsplattform
   verursacht.

Die sich hieraus ergebenden Vorteile sind analog zu denen des beschriebenen Verfahrens.

Im Folgenden werden bevorzugte Ausführungsbeispiele der vorliegenden Erfindung unter Bezugnahme auf die begleitende Figur erläutert:
- Fig. 1:: zeigt ein Diagramm des erfindungsgemäßen Verfahrens zur Aktivierung des virtuellen Sprachassistenten eines Nutzerendgeräts ohne die Nutzung eines "Wake-Up-Words".
- Fig. 2:: zeigt ein Diagramm der Zuordnung von Sprachbefehlen an einen hierfür vorgesehenen virtuellen Sprachassistenten aus Fig. 1.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

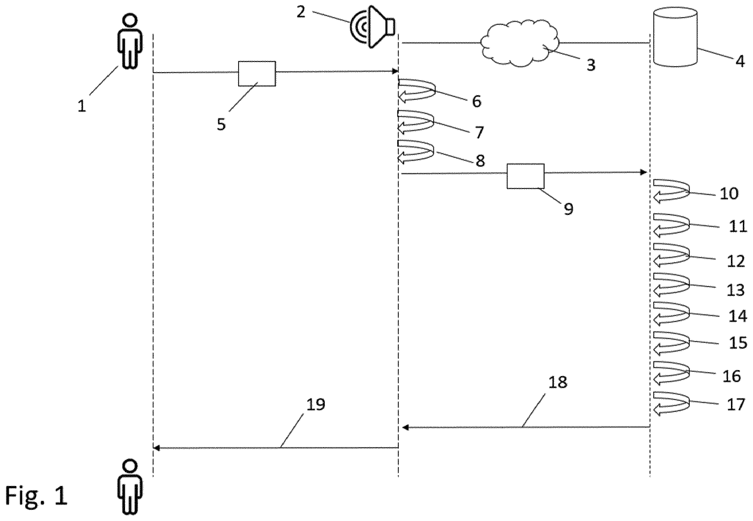

Fig. 1 zeigt einen Nutzer 1 der mit seinem Nutzerendgerät 2 auf dem ein virtueller Sprachassistenten installiert ist kommuniziert. Über ein Netzwerk 3, insbesondere das Internet, ist das Nutzerendgerät mit einer Sprachdienstleistungsplattform 4 verbunden.

Das Verfahren läuft nun wie folgt ab: Der Nutzer spricht und erzeugt hierdurch eine Sprachsequenz 5, wobei die Sprachsequenz 5 auch als Audiosignal 5 bezeichnet werden kann. Diese Sprachsequenz 5 wird von einer Mikrofoneinheit des Nutzerendgeräts 2 als Input aufgezeichnet. Insbesondere weist diese Sprachsequenz 5 kein "Wake-Up-Word" auf. Ist das Nutzerendgerät 2 zusätzlich mit einer Kameraeinheit ausgestattet, so wird in Schritt 6 das Kamerabild dahingehend analysiert, ob der Nutzer, während er die Sprachsequenz 5 sagt, in Richtung des Nutzerendgeräts blickt.

In Schritt 7 berechnet das Nutzerendgerät 2 ein Signal-zu-Rausch-Verhältnis der Sprachsequenz 5 und vergleicht dieses mit vorherigen Sprachsequenzen dahingehend, ob der Nutzer während der Sprachsequenz 5 in Richtung des Nutzerendgeräts 2 orientiert war.

In Schritt 8 wird durch eine erste Analyse die Wahrscheinlichkeit bestimmt, dass es sich bei der Sprachsequenz 5 des Nutzers um einen Sprachbefehl 9 gehandelt hat. Ist dies der Fall, wird der Sprachbefehl 9 über das Netzwerk 3 an die Sprachdienstleistungsplattform 4 übermittelt. Zusätzlich zu dem Sprachbefehl 9 können auch alle zusätzlichen Sensordaten, also insbesondere Audiodaten und Kameradaten, des Nutzerendgeräts 2 an die Sprachdienstleistungsplattform 4 übermittelt werden. Um zu ermitteln, ob es sich um einen Sprachbefehl 9 handelt, können auch Voice-ID Technologien wie Diarization verwendet werden.

In Schritt 10 wird von der Sprachdienstleistungsplattform ein Signalkegel der Sprachrichtung der Sprachsequenz 5, basierend auf den empfangenen Sensordaten ermittelt, um festlegen zu können, ob die Sprachsequenz 5 wirklich für den virtuellen Sprachassistenten vorgesehen ist.

In Schritt 11 wird anhand der Sprachsequenz 5 eine Identifikation des Nutzers 1 vorgenommen und bestimmt, ob die Sprachsequenz 5 einem bekannten Nutzer zugeordnet werden kann oder von einer unbekannten Person stammt.

In Schritt 12 wird anhand der Betonung der Sprachsequenz 5 ermittelt, ob es sich bei dem Sprachbefehl 9 um eine Frage oder eine Anordnung durch den Nutzer 1 an den virtuellen Assistenten handelt.

In Schritt 13 wird die Sprachsequenz fünf zunächst zu Text transkribiert und in der Folge in Bezug auf die Semantik und die Syntax analysiert, um der Sprachsequenz 5 einen bestimmten Sprachbefehl zuzuordnen. Hierbei wird eine typische menschliche Syntax bzw. Semantik zu Grunde gelegt.

In Schritt 14 wird der Inhalt des Sprachbefehls 9 dahingehend gefiltert, ob der Sprachbefehl 9 überhaupt von dem virtuellen Assistenten ausführbar ist. Ein Sprachbefehl 9 wie etwa "Kannst Du mir bitte ein Glas Wasser holen!" Kann von dem virtuellen Sprachassistenten nicht ausgeführt werden.

In Schritt 15 folgt die finale Bestimmung der Wahrscheinlichkeit, dass es sich bei der Sprachsequenz 5 um einen Sprachbefehl 9 für den virtuellen Sprachassistenten gehandelt hat.

In Schritt 16 wird folgendes ausgeführt: Wenn die Sprachsequenz 5 als Sprachbefehl 9 für den virtuellen Sprachassistenten akzeptiert worden ist, geschieht die Auflösung von Domänen, Absichten und Entitäten, um das angeforderte Kommando auszuführen.

In Schritt 17 wird eine zu dem Sprachbefehl 9 passende Sprachantwort generiert.

In Schritt 18 wird die passende Sprachantwort an das Nutzerendgerät 2 gesendet.

In Schritt 19 wird die passende Sprachantwort von Lautsprechern des Nutzerendgeräts 2 an den Nutzer 1 abgespielt.

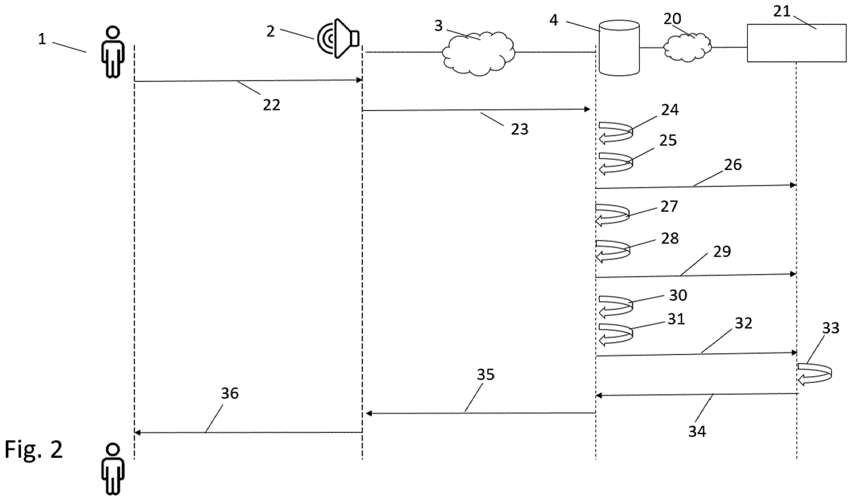

Fig. 2 zeigt ein Diagramm der Zuordnung von Sprachbefehlen an einen hierfür vorgesehenen virtuellen Sprachassistenten aus Fig. 1 aus einer Mehrzahl an virtuellen Sprachassistenten 21.

Die Fig. 2 weist hierfür Schritte auf, die mit den Schritten des Ausführungsbeispiels aus Fig. 1 kombiniert werden können. Insbesondere wird eine Zuordnung des entsprechenden virtuellen Sprachassistenten 21 erst vorgenommen, wenn dem Ausführungsbeispiel gemäß Fig. 1. Zunächst festgestellt wurde, dass es sich bei der Sprachsequenz 5 um einen Sprachbefehl handelt.

Fig. 2 zeigt zusätzlich zu Fig. 1, dass die Sprachdienstleistungsplattform 4 über ein weiteres Netzwerk 20 mit einer Mehrzahl von virtuellen Sprachassistenten 21 verbunden ist.

In Schritt 22 gibt der Nutzer 1 die Sprachsequenz 5 ab, ohne hierbei einen bestimmten virtuellen Sprachassistenten zu spezifizieren, der zur Erfüllung der Anfrage verwendet werden soll. Außerdem benutzt der Nutzer auch in diesem Fall kein "Wake-Up-Word".

In Schritt 23 wird die Sprachsequenz 5 von dem Nutzerendgerät 2 an die Sprachdienstleistungsplattform 4 gesendet.

In Schritt 24 wird als nächster Prozess die Domäne der transkribierten der Sprachsequenz 5 des Nutzers 1 aufgelöst, respektive ermittelt.

In Schritt 25 wird auf der Grundlage der identifizierten Domäne der entsprechende virtuelle Sprachassistent aus der Mehrzahl der virtuellen Sprachassistenten 21 bestimmt, der zur Erfüllung des Sprachbefehls 9 des Nutzers 1 eingesetzt werden soll und in der Lage ist, die Anfrage zu erfüllen.

In Schritt 26 wird der Sprachbefehl 9 zur Bearbeitung an den entsprechenden virtuellen Sprachassistenten weitergeleitet, wenn die Domäne für den entsprechenden Assistenten eindeutig ist.

Schritt 27: Kann die Domäne von mehreren virtuellen Sprachassistenten bearbeitet werden, werden weitere Analysen des Sprachbefehls 9 vorgenommen, wie etwa die Absicht des Sprachbefehls, um eine mögliche Auswahl der virtuellen Sprachassistenten weiter, möglichst auf einen einzigen virtuellen Sprachassistenten, eingrenzen zu können

Schritt 28: Der entsprechend geeignete virtuelle Sprachassistent wird ermittelt.

Schritt 29: Der Sprachbefehl 9 wird an den ermittelten virtuellen Sprachassistenten weitergeleitet, außer, der geeignete virtuelle Sprachassistent konnte wiederum nicht eindeutig ermittelt werden.

Schritt 30: Zur weiteren Eingrenzung der virtuellen Sprachassistenten auf möglichst einen einzigen virtuellen Sprachassistenten, wird der Kontext des Benutzers sowie Präferenzen oder eine Befehlshistorie analysiert, um zu bestimmen welcher der noch verbliebenen virtuellen Sprachassistenten entweder besonders geeignet oder eindeutig für diese Aufgabe ermittelt werden kann.

In Schritt 31 wird der zu verwendende virtuelle Sprachassistent final ermittelt.

In Schritt 32 wird der Sprachbefehl 9 an den ermittelten virtuellen Sprachassistenten weitergeleitet.

In Schritt 33 erzeugt der virtuelle Sprachassistent die entsprechenden Befehle bzw. die entsprechende Sprachantwort basierend auf dem Sprachbefehl 9.

In Schritt 34 wird die Sprachantwort an die Sprachdienstleistungsplattform 4 gesendet, wobei die Sprachdienstleistungsplattform 4 die Sprachantwort in Schritt 35 an das Nutzerendgerät 2 weitersendet.

In Schritt 36 gibt das Nutzerendgerät 2 die Sprachantwort an den Nutzer 1 aus.

## Patentansprüche

1. Verfahren zur Aktivierung eines sich im Ruhemodus befindlichen virtuellen Sprachassistenten eines Nutzerendgeräts umfassend die folgenden Schritte:
• Aufnahme einer Sprachsequenz eines Nutzers (1) mittels einer Mikrofoneinheit des Nutzerendgeräts (2);
• Durchführen einer ersten Analyse durch einen auf einer Rechnereinheit des Nutzerendgeräts (2) implementierten Algorithmus, ob es sich bei der Sprachsequenz (5) um einen an das Nutzerendgerät (2) gerichteten Sprachbefehls (9) handelt und falls die Analyse ergibt, dass es sich um einen Sprachbefehl (9) für das Nutzerendgerät (2) handelt, werden folgende weitere Schritte ausgeführt:
• Durchführen einer zweiten Analyse der Sprachsequenz (5) durch das Nutzerendgerät und/oder Durchführen der zweiten Analyse der Sprachsequenz (5) durch eine Sprachdienstleistungsplattform im Backend an die die Sprachsequenz (5) über ein Netzwerk (3) weitergeleitet wurde, wobei die zweite Analyse aus der Sprachsequenz (5) die Bedeutung des Sprachbefehls (9) ermittelt;
∘ Generierung einer Sprachantwort basierend auf dem Sprachbefehl durch das Nutzerendgerät (2) oder durch die Sprachdienstleistungsplattform (4) und Ausgabe der Sprachantwort an den Nutzer (1) mittels einer Lautsprechereinheit des Nutzerendgeräts (2),
und/oder
∘ Ausführen des Sprachbefehls (9) durch das Nutzerendgerät (4) oder durch die Sprachdienstleistungsplattform (4).

2. Verfahren nach Anspruch 1, **dadurch gekennzeichnet, dass** zusätzliche Aufnahme eines Kamerabildes mit einer Kameraeinheit des Nutzerendgeräts (2) gemacht werden und dass die Informationen des Kamerabildes für die erste Analyse verwendet werden.

3. Verfahren nach einem der vorhergehenden Ansprüche, **dadurch gekennzeichnet, dass** die erste Analyse ein Signal-zu-Rausch Verhältnis der Sprachsequenz (5) analysiert.

4. Verfahren nach einem der vorhergehenden Ansprüche, **dadurch gekennzeichnet, dass** die erste Analyse eine Entfernung des Nutzers (1) mittels einer Entfernungsmesseinheit der Mikrofoneinheit abschätzt.

5. Verfahren nach einem der vorhergehenden Ansprüche, **dadurch gekennzeichnet, dass** zweite Analyse eine Transkription Sprachsequenz (5) zu einem Text umfasst.

6. Verfahren nach Anspruch 5, **dadurch gekennzeichnet, dass** der Sprachbefehl (9) aus dem transkribierten Text ermittelt wird.

7. Verfahren nach einem der vorhergehenden Ansprüche, **dadurch gekennzeichnet, dass** die zweite Analyse durch den auf dem Nutzerendgerät (2) implementierten Algorithmus und/oder durch einen Sprachdienstleistungsplattform (4) implementierten Algorithmus ausgeführt wird.

8. Verfahren nach einem der vorhergehenden Ansprüche, **dadurch gekennzeichnet, dass** zumindest einer der beiden Algorithmen ein intelligenter "Machine-Learning-Algorithmus" ist der mittels überwachtem Lernen trainiert wird.

9. Verfahren nach Anspruch 8, **dadurch gekennzeichnet, dass** zumindest einer der Algorithmen regelmäßig aktualisiert wird.

10. Verfahren nach Anspruch 6, **dadurch gekennzeichnet, dass** der Sprachbefehl (9) von der Sprachdienstleistungsplattform (4) analysiert und einem für den Sprachbefehl (9) vorgesehenen virtuellen Sprachassistenten aus einer Mehrzahl von virtuellen Sprachassistenten (21) zugeordnet wird.

11. Verfahren nach Anspruch 10, **dadurch gekennzeichnet**, die Sprachdienstleistungsplattform (4) den Sprachbefehl (9) an den zugeordneten virtuellen Sprachassistenten übermittelt.

12. Verfahren nach einem der Ansprüche 10 bis 11, **dadurch gekennzeichnet, dass** die Zuordnung durch den Vergleich des Sprachbefehls mit einer in der Sprachdienstleistungsplattform (4) hinterlegten Datenbank ermittelt wird und/oder durch eine sequenzielle Anfrage an die Mehrzahl von Sprachassistenten (21).

13. Nutzerendgerät zur Aktivierung eines sich im Ruhemodus befindlichen virtuellen Sprachassistenten des Nutzerendgeräts, wobei das Nutzerendgerät (2) zur Ausführung des Verfahrens nach einem der Schritte 1-9 eingerichtet ist.

14. Kommunikationssystem umfassend ein Nutzerendgerät (2) sowie eine Sprachdienstleistungsplattform (4), wobei das Nutzerendgerät 2) über ein Kommunikationsnetzwerk mit der Sprachdienstleistungsplattform (4) verbunden ist, wobei das Kommunikationssystem zur Aktivierung eines sich im Ruhemodus befindlichen virtuellen Sprachassistenten des Nutzerendgeräts nach einem der Schritte 1-12 eingerichtet ist.

15. Computerprogramprodukt zur Aktivierung eines sich im Ruhemodus befindlichen virtuellen Sprachassistenten des Nutzerendgeräts,
• wobei das Computerprogramprodukt die Ausführung der Schritte des Verfahrens nach einem der Ansprüche 1-9 auf einem Nutzerendgerät (2)
oder
• wobei das Computerprogramprodukt die Ausführung der Schritte des Verfahrens nach einem der Ansprüche 1-12 auf einer Sprachdienstleistungsplattform (4)
verursacht.
